## Europäisches Patentamt

## European Patent Office

## Office européen des brevets

(19)

(11) Numéro de publication : **0 087 592**
**B1**

(12)

# FASCICULE DE BREVET EUROPÉEN

(45) Date de publication du fascicule du brevet :
**11.10.89**

(51) Int. Cl.⁴ : **G 01 B 11/24**, G 01 B 11/02

(21) Numéro de dépôt : **83100812.3**

(22) Date de dépôt : **28.01.83**

(54) **Procédé et dispositif de mesure du profil transversal du champignon d'un rail d'une voie ferrée.**

(30) Priorité : **25.02.82 CH 1149/82**

(43) Date de publication de la demande :
**07.09.83 Bulletin 83/36**

(45) Mention de la délivrance du brevet :
**11.10.89 Bulletin 89/41**

(84) Etats contractants désignés :
**AT BE CH DE FR GB IT LI NL SE**

(56) Documents cités :
**DE--A-- 1 423 606**
**DE--A-- 2 356 491**
**DE--A-- 2 855 877**
**US--A-- 4 198 164**

(73) Titulaire : **SPENO INTERNATIONAL S.A.**
**Case Postale 16 22-24, Parc Château-Banquet**
**CH-1211 Genève 21 (CH)**

(72) Inventeur : **Panetti, Romolo**
**24, Parc Château-Banquet**
**CH-1202 Geneve (CH)**

(74) Mandataire : **Micheli, Michel-Pierre et al**
**MICHELI & CIE 118, Rue du Rhône Case Postale 47**
**CH-1211 Genève 6 (CH)**

Jouve, 18, rue St-Denis, 75001 Paris, France

**Description**

La présente invention se rapporte à un procédé et un dispositif de mesure du profil transversal du champignon d'un rail d'une voie ferrée. Plus particulièrement ce procédé et ce dispositif de mesure sont du type optique, sans contact matériel avec le rail.

On connaît des procédés de mesure du profil transversal de la table de roulement d'un rail ou d'une autre surface courbe dans lesquels on projette une ligne lumineuse sur la surface à mesurer de manière à créer une trace lumineuse transversale sur cette surface. Cette trace est alors observée sous un angle différent de celui utilisé pour sa projection. L'image de la trace ainsi observée peut être reproduite sur un écran ou traitée électroniquement pour permettre sa comparaison avec un profil de référence en vue d'obtenir les écarts du profil réel par rapport à ce profil de référence.

Ces procédés, comme ceux décrits par exemple dans les demandes de brevets DE-A 2.356.491 et DE-A 1.423.606 sont utilisables pour la mesure d'une surface courbe pour autant que celle-ci ne présente pas de portions parallèle ou tangente à la direction d'observation de la trace lumineuse, mais ne permettent pas de mesurer d'une manière satisfaisante le profil des congés et des flancs d'un rail.

On a proposé il est vrai pour remédier à cet inconvénient (cf. demande de brevet allemand DE-A 2.855.877), la multiplication des postes d'observation de la trace lumineuse mais on obtient alors plusieurs informations fragmentaires qu'il est très difficile de combiner et d'interpréter.

La présente invention a pour but de remédier aux inconvénients de ces procédés et dispositifs de mesure connus tout en conservant les avantages que présente la mesure du profil transversal des rails d'une voie ferrée par voie optique. Elle permet d'obtenir avec une précision de l'ordre du centième de millimètre le profil complet et la mesure du champignon d'un rail sur tout son pourtour, (table de roulement, congés et flancs du champignon du rail).

Le procédé selon la présente invention consiste à projeter par rayonnement une trace sur le pourtour de la surface du champignon d'un rail d'une voie ferrée, ceci dans un plan formant un angle avec l'axe longitudinal du rail et à observer cette trace à partir de plusieurs points situés en dehors du plan de projection de ladite trace.

Il se caractérise par le fait qu'on singularise un point de la trace pour en faire une origine flottante, par le fait que l'on observe ladite trace sous deux directions au moins, formant un angle entre elles, pour obtenir des reproductions partielles de celle-ci contenant chacune l'origine flottante, et par le fait que l'on superpose les images de l'origine flottante des reproductions partielles de la trace et que l'on décale angulairement, autour de l'origine flottante, les reproductions partielles de la trace d'un angle fonction des angles sous lesquels la trace est observée.

On obtient ainsi une représentation complète et fidèle du profil transversal du champignon du rail. Il est alors possible de comparer le profil de ce champignon avec un profil de référence en superposant l'image du profil observé et du profil de référence. La comparaison de ces deux images permet de mesurer pour autant de génératrices que l'on désire les écarts du champignon du rail observé par rapport au profil de référence.

L'invention a également pour objet un dispositif pour la mise en œuvre du procédé décrit qui comprend les caractéristiques énumérées dans la revendication 2.

Le dessin annexé illustre schématiquement le procédé selon l'invention et à titre d'exemple une forme d'exécution pour sa mise en œuvre.

Les figures 1 et 2 illustrent schématiquement en plan et de côté la trace lumineuse marquée sur le rail et les dispositifs d'observation de cette trace.

La figure 3 illustre les représentations partielles de la trace lumineuse telles qu'elles sont observées.

Les figures 4 et 5 illustrent la reconstitution de l'ensemble du profil du champignon du rail.

La figure 6 illustre la comparaison du profil réel du champignon du rail avec le profil de référence.

La figure 7 illustre un dispositif selon l'invention monté sur un chariot tracté par un véhicule ferroviaire.

La figure 8 illustre une coupe transversale suivant la ligne A-A de la figure 7.

La figure 9 illustre un schéma bloc du dispositif électronique utilisé pour le traitement des traces observées et la comparaison du profil réel du champignon du rail avec un profil de référence.

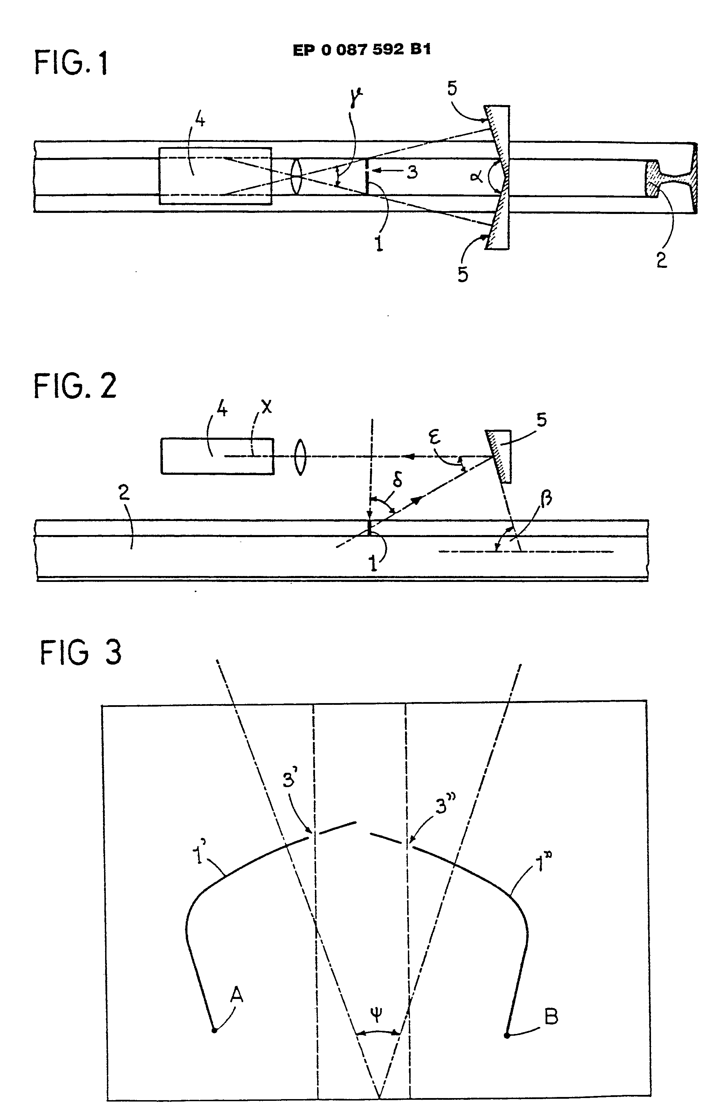

La figure 1 montre schématiquement la projection d'une trace lumineuse 1 sur le pourtour du champignon d'un rail 2. Cette trace lumineuse est contenue dans un plan formant un angle avec l'axe longitudinal du rail, mais de préférence dans un plan transversal au rail, perpendiculaire ou non à l'axe longitudinal de celui-ci.

Cette trace lumineuse peut être remplacée par toute trace obtenue sur le rail par rayonnement. On peut à cet effet utiliser des rayons infrarouges, ultra-violets, un rayonnement ultrasonique, etc.

En variante la trace 1 peut être contenue dans deux plans ou deux demi-plans formant un angle entre eux ainsi qu'avec l'axe longitudinal du rail. La trace lumineuse 1 comporte sur la surface de roulement du champignon du rail, un point singulier 3. Ce point singulier peut être un point présentant une intensité lumineuse différente de celle du reste de la trace obtenue par annulation locale du faisceau lumineux projetant la trace, par superposition d'une autre source lumineuse sur une partie de la trace ou par l'intersection de deux parties de la trace lorsque celle-ci est contenue dans deux demi-plans.

L'observation de la trace se fait soit avec une seule caméra 4 et deux miroirs 5, 6 disposés de part et d'autre de l'axe du rail et formant entre eux un angle α, soit à l'aide de deux caméras, ce qui permet une double observation partielle de la trace lumineuse sous un angle de 180° — α = γ. La forme de ces observations partielles de la trace 1 et leur position relative dépend en outre de tous les angles d'observation de la trace, de l'angle β que forment les miroirs avec l'axe longitudinal du rail, et des angles δ et ε que forme l'axe X optique de la caméra 4 par rapport à l'axe longitudinal du rail. Chacune de ces observations partielles reproduit le point singulier 3 de la trace 1.

La figure 3 montre les deux représentations partielles 1', 1″ obtenues par ce procédé comprenant chacune l'image 3', 3″ du point singulier 3 de la trace 1.

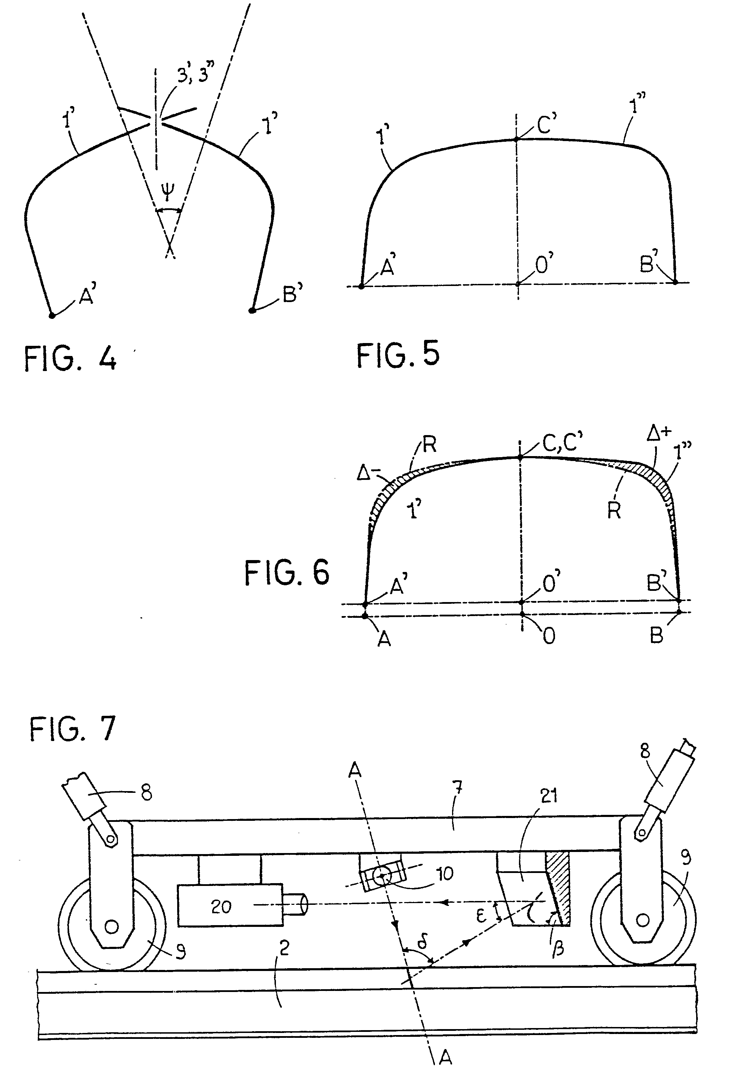

Par une translation, on rapproche les deux images partielles 1' et 1″ de la trace 1 de manière à faire coïncider les deux images 3', 3″ du point singulier 3 de cette trace. L'image obtenue après translation est illustrée à la figure 4. Pour obtenir une représentation conforme de la trace 1 les deux représentations partielles 1', 1″ de celle-ci sont ensuite décalées angulairement de l'angle ψ, (figures 3 et 4) en fonction des angles d'observation α, γ, de sorte que tout le profil du champignon du rail est reproduit (figure 5) de façon continue.

Ce profil du champignon du rail comporte une base A'-B' déterminée par les points inférieurs des flancs du champignon du rail dont le point milieu est O'. La médiatrice élevée sur la base A'-B' coupe la ligne du profil en un point C'.

Pour déterminer les écarts du profil réel du champignon du rail par rapport à un profil de comparaison ayant une base A-B et une médiatrice O-C, on superpose le profil de comparaison au profil observé en faisant coïncider les points C et C' des médiatrices, et en superposant ces médiatrices O-C et O'-C'.

Ce profil de comparaison correspond à la trace que donnerait un profil étalon vue sous les mêmes angles de projection et d'observation α, β, δ, ε.

Une autre manière de faire serait de modifier la trace observée ainsi obtenue (figure 5) pour tenir compte des autres angles d'observation et de projection β, δ, ε puis de la comparer au profil étalon.

On s'aperçoit dans l'exemple illustré (figure 6) que par rapport au profil de comparaison R le profil réel présente un manque de matière dans sa moitié gauche, soit un écart négatif Δ — et un surplus de matière dans sa moitié droite correspondant à un écart positif Δ +. Pour chaque point du profil, cet écart Δ peut être exprimé en coordonnées polaires ou cartésiennes par exemple, et ces informations peuvent être utilisées pour commander la position et la pression sur le rail d'outils de reprofilage de celui-ci.

Une autre façon de déterminer les écarts du profil réel du champignon du rail par rapport au profil de comparaison, consiste à faire coïncider les abscisses des deux points A' et A de ces profils et faire coïncider les ordonnées des points O' et O de ces profils de manière à comparer les profils réels et de comparaison par la superposition de leurs portions correspondant au flanc interne du rail.

L'angle entre les deux directions d'observation peut être compris entre 20° et 120° par exemple, de préférence entre 30° et 90°. Il dépend de la forme du champignon du rail usé, de conditions d'encombrement de l'appareil optique et de la précision requise pour la mesure.

Le traitement optique et/ou électronique des deux représentations partielles de la trace pour les redresser, c'est-à-dire les faire pivoter autour d'un centre fictif correspondant à l'intersection des directions d'observation ainsi que pour faire coïncider la position de l'origine flottante des deux représentations partielles de la trace peut s'effectuer à l'aide de moyens existants.

Ce procédé de mesure du profil transversal du champignon d'un rail de voie ferrée peut être appliqué à la mesure continue en voie dudit profil. En effet, la source de rayonnement par exemple et la caméra ainsi que les miroirs, ou les caméras, peuvent être montés sur un véhicule se déplaçant le long de la voie. Ainsi, en répétant la mesure à des intervalles de temps déterminés, on peut obtenir un échantillonnage des profils successifs transversaux d'un rail.

Pour obtenir une mesure de profil transversal d'un rail qui soit indépendante des défauts ponctuels du rail, il est possible de réaliser successivement plusieurs mesures à des intervalles de temps très rapprochés puis de faire la moyenne de ces profils. C'est alors ce profil moyen qui est comparé au profil de référence.

Il est ainsi possible en pratique d'effectuer la mesure du profil transversal du champignon d'un rail dans l'ordre suivant :

1. On mesure plusieurs fois de suite un profil toutes les 50 ms.

2. Pendant les 250 ms. suivantes, on établit la moyenne des profils mesurés.

3. Pendant les 500 ms. suivantes, on compare le profil moyen obtenu avec le profil étalon ou de référence et on détermine les écarts entre ces profils.

4. Pendant les 4 000 ms. suivantes, on transcrit graphiquement le résultat de ces mesures sur une imprimante.

Ainsi, on réalise une séquence complète toutes les 5 secondes ce qui correspond à la mesure d'un profil moyen tous les 10 m pour une vitesse de déplacement de 7,2 km/h ou tous les 100 m pour une vitesse de déplacement de 72 km/h.

En plus de la représentation graphique obtenue par imprimante, on peut bien entendu obtenir une information digitale sur les écarts entre le profil mesuré et le profil étalon sur un nombre de génératrices déterminé du rail. On peut également avoir un contrôle visuel instantané et continu par vidéo.

Ainsi grâce au fait que l'on crée un point singulier, ou origine flottante, sur la trace projetée sur la surface du rail et qu'on observe cette trace suivant deux directions formant un angle entre elles et situées de part et d'autre d'un plan longitudinal du rail, il est possible d'obtenir selon ce procédé une mesure précise du profil réel transversal d'un rail y compris ses flancs et ses congés ceci même lors de la présence de bavures ou de fortes déformations de la surface du champignon du rail qui rendraient l'utilisation des procédés connus inopérante.

Ce procédé est en outre particulièrement intéressant du fait que la totalité du profil transversal d'un rail peut être appréhendé. Il est de plus très flexible et peut s'adapter facilement, en modifiant les directions d'observation, pour obtenir une mesure optimale du profil compte tenu d'un genre d'usure du rail. Par exemple pour un rail usé pratiquement symétriquement les directions d'observation seront pratiquement symétriques par rapport au plan vertical longitudinal du rail tandis que pour un rail usé dissymétriquement, présentant par exemple une bavure d'un côté l'angle que forme la direction d'observation du côté de la bavure par rapport au plan de symétrie longitudinal du rail sera plus grand que l'angle entre ce plan et l'autre direction d'observation.

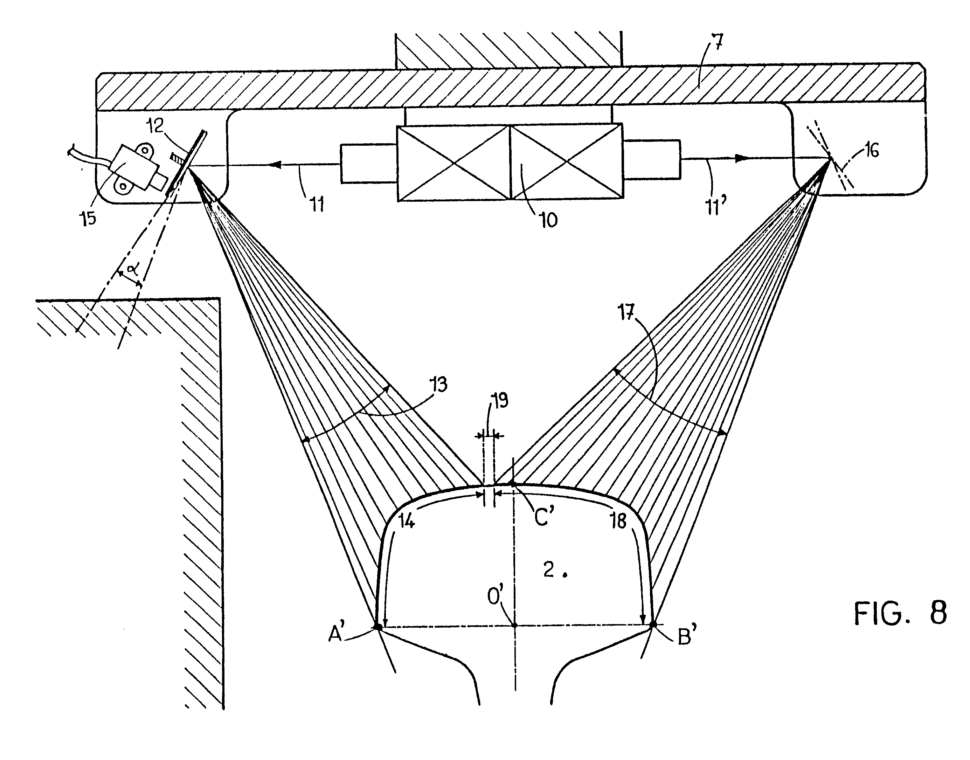

Un dispositif pour l'utilisation du procédé décrit est illustré schématiquement aux figures 7, 8 et 9. Ce dispositif est monté sur un chariot de mesure 7 relié à un véhicule ferroviaire (non illustré) par des vérins 8, articulés sur le chariot et le véhicule, permettant de déplacer verticalement ce chariot 7 par rapport au véhicule et de l'appliquer sur les rails 2 par l'intermédiaire de galets à boudins 9, de façon à garder la base 7 du chariot à distance constante du rail 2.

Pour chaque file de rail, le chariot 7 porte un dispositif de mesure du profil de la surface du champignon du rail comprenant une source de rayonnement, par exemple un laser 10 émettant deux rayons 11, 11' opposés suivant une direction perpendiculaire à l'axe longitudinal du rail 2.

Le rayon 11 est reçu par un premier miroir oscillant 12 formant un pinceau de rayon 13 dans un plan formant un angle avec l'axe longitudinal du rail 2. L'amplitude de l'oscillation angulaire α du miroir 12 est telle que ce pinceau de rayon 13 forme une première trace partielle 14 sur la surface du flanc externe et une partie de la surface de roulement du champignon du rail 2.

Le miroir 12 est monté oscillant sur le chariot 7 à l'aide de lames élastiques et est entraîné en vibration par un moteur électro-magnétique 15 monté également sur le chariot 7.

D'une façon analogue le rayon 11' est réfléchi par un second miroir oscillant 16 formant un second pinceau de rayon 17, situé dans le même plan que le pinceau 13, formant une seconde trace partielle 18 sur la surface du flanc interne et une partie de la surface de roulement du champignon du rail 2. Les oscillations des miroirs 12 et 16 sont de préférence rapides et en synchronisme.

Ces première et seconde traces partielles 14, 18 ne se recouvrent pas, au contraire une portion 19 de la surface du champignon du rail 2 ne reçoit pas de rayonnement, cette portion constitue le point singulier, utilisé comme origine flottante des deux traces partielles 14 et 18.

En variante ces traces partielles 14, 18 peuvent se recouvrir partiellement pour former un point singulier d'une intensité lumineuse plus grande.

La trace 14, 18, 19 st observée par une caméra 20, fixée au chariot 7, à l'aide de deux miroirs 21 (dont un seul est visible à la figure 7) formant un angle entre eux. Chacun de ces miroirs observe la trace sous un angle différent et réfléchit sur la caméra 20 une partie de la trace 14, 18, 19, chacune des portions 14, 19 et 18, 19 de la trace contenant le point singulier 19 de celle-ci.

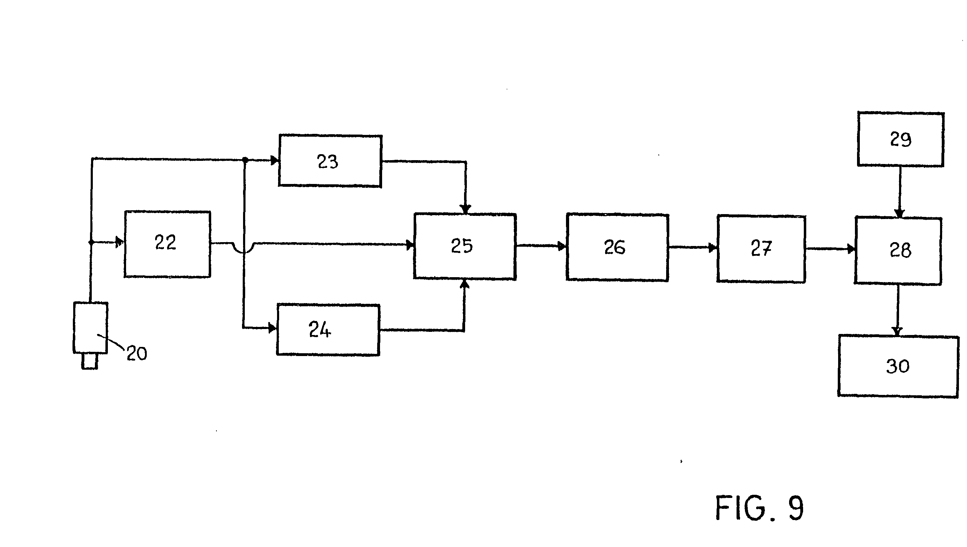

Le dispositif de mesure comporte encore un appareillage électronique pour le traitement des signaux délivrés par la caméra 20, représentatifs des portions de la trace 14, 18, 19 réfléchies par chacun des miroirs 21, dont le schéma bloc est illustré à la figure 9.

Les signaux délivrés par la caméra 20 alimentent d'une part un calculateur 22 définissant la position de la discontinuité 19 apparaissant dans les reproductions partielles 14, 18 de la trace, et d'autre part deux discriminateurs 23, 24. Le discriminateur 23 ne laisse passer que les signaux afférant à l'une des représentations partielles de la trace tandis que le discriminateur 24 ne laisse passer que les signaux afférant à l'autre représentation partielle de cette trace.

Les sorties du calculateur 22 et des deux discriminateurs 23, 24 sont reliées aux entrées d'un translateur 25 permettant par translation de faire coïncider les deux représentations de la discontinuité 19 de la trace 14, 18.

La sortie de ce translateur 25 alimente un circuit de décalage angulaire 26 provoquant un décalage relatif angulaire entre les deux traces partielles 14, 18, d'un angle fonction des angles d'observation de cette trace.

Le signal de sortie du translateur 25 correspond à la représentation illustrée à la figure 4 tandis que les signaux de sortie du circuit de décalage 26 correspondent à la représentation de la figure 5 et donc à la forme du profil réel du rail 2.

Le signal de sortie du circuit de décalage 26 alimente un calculateur 27 déterminant la médiatrice O'-C' de la base A'-B' du profil du rail. Le signal de sortie de ce calculateur 27 alimente un comparateur 28 recevant d'autre part d'une mémoire 29 des informations relatives à la forme d'un profil de référence et de la position de sa médiatrice O-C. Ce comparateur fait coïncider les médiatrices O-C et O'-C' ainsi que les points C et C' de ces médiatrices et délivre des signaux correspondant à la représentation superposée des profils réel et de référence (représentation de la figure 6) et/ou des signaux correspondant aux écarts Δ +, Δ — entre ces profils.

La sortie de ce comparateur 28 alimente un oscilloscope et/ou une imprimante 30 permettant une visualisation respectivement une représentation graphique ou numérique des écarts entre les profils de référence et réel par exemple comme décrit dans la demande de brevet européen No. 80 107901.3 publiée sous le No. 004488.5.

La réalisation des différents circuits et éléments de cet appareillage électronique fait appel à une technologie conventionnelle et ne sera pas décrite en détail ici.

Dans d'autes formes d'exécution du dispositif de mesure du profil du champignon d'un rail la projection de la trace sur la surface de ce champignon du rail peut se faire à l'aide d'une source de rayonnement, par exemple lumineux, infra-rouge, ultra-violet ou d'autres longueurs d'ondes tel par exemple les ultrasons. Cette source de rayonnement peut être linéaire ou curviligne arquée autour du rail et comporte un masque comportant deux fenêtres définissant les deux pinceaux de rayons plans 13, 17. La définition de la trace est moins précise par contre l'avantage de cette solution réside dans la simplicité constructive et donc le faible coût.

Lorsque la trace est projetée dans un plan elle présente vue de dessus la forme d'une droite, perpendiculaire ou oblique par rapport à l'axe longitudinal du rail.

Par contre, lorsque la trace est projetée dans deux demi-plans elle présente vue en plan la forme d'une ligne brisée ; dans ce cas le point angulaire de cette ligne peut constituer l'origine flottante de la trace.

Dans une variante non illustrée mais tout aussi importante de l'invention, les miroirs 21 peuvent être supprimés et l'observation de la trace se fait alors à l'aide de deux caméras dont les axes optiques forment un angle entre eux. Cette solution est avantageuse en ce qu'elle permet de réduire le nombre de surfaces réfléchissantes du dispositif qui nécessitent un entretien et notamment un nettoyage relativement fréquent.

Dans d'autres formes de réalisation, les miroirs peuvent être remplacés par des fibres optiques éventuellement munies d'objectifs. La suite du traitement de ces deux images partielles est la même que dans les exécutions précédemment décrites.

En prenant comme base de référence le cadre du chariot 7 et lorsque celui-ci est équipé de deux dispositifs de mesure du profil du champignon d'un rail, travaillant chacun sur un rail de la voie ferrée, il est possible de positionner relativement l'un par rapport à l'autre les profils mesurés et d'en déduire l'inclinaison des tables de roulement des rails de la voie ferrée.

**Revendications**

1. Procédé pour la mesure du profil transversal du champignon d'un rail de voie ferrée selon lequel on projette par rayonnement une trace sur la surface du champignon d'un rail d'une voie ferrée, et on observe cette trace à partir de plusieurs points situés en dehors du plan de projection de cette trace, caractérisé par le fait qu'on singularise un point de la trace pour en faire une origine flottante, par le fait qu'on observe ladite trace sous deux directions au moins formant un angle entre elles et avec le plan de projection de ladite trace et situées de part et d'autre d'un plan vertical passant par l'axe longitudinal du rail pour obtenir des reproductions partielles de celle-ci contenant chacune l'origine flottante, et par le fait que l'on superpose les images de l'origine flottante des reproductions partielles de la trace et qu'on décale angulairement, autour de l'origine flottante, les reproductions partielles de la trace d'un angle fonction des angles sous lesquels la trace est observée.

2. Procédé selon la revendication 1, caractérisé par le fait qu'on compare le profil mesuré à un profil de comparaison et qu'on détermine les écarts entre ces deux profils sous forme graphique ou numérique.

3. Procédé selon la revendication 2, caractérisé par le fait qu'on détermine une base pour le profil mesuré et pour le profil de comparaison passant par les points de ces profils correspondant aux points inférieurs en flancs du champignon du rail réel respectivement de comparaison, qu'on détermine la médiatrice de ces bases ainsi que son intersection avec le profil qui lui est associé.

4. Procédé selon la revendication 3, caractérisé par le fait qu'on compare le profil mesuré au profil de comparaison en superposant lesdites médiatrices de ces profils et en faisant coïncider les intersections de ces médiatrices avec le profil qui lui est associé.

5. Procédé selon la revendication 3, caractérisé par le fait qu'on compare le profil mesuré au profil de comparaison en faisant coïncider les coordonnées des intersections de chaque médiatrice avec le profil correspondant et en faisant coïncider les abscisses des points de la base de chacun de ces profils correspondant au point inférieur du flanc intérieur de chaque profil.

6. Procédé selon l'une des revendications 1 à 5, caractérisé par le fait qu'on effectue successivement la mesure de deux ou plusieurs profils du rail en différents endroits de celui-ci, puis forme la moyenne des profils mesurés, et par le fait que cette moyenne des profils mesurés est comparée à un profil de comparaison pour obtenir une représentation graphique ou numérique des écarts entre le profil moyen mesuré et le profil étalon.

7. Procédé selon l'une des revendications précédentes, caractérisé par le fait qu'on projette ladite trace dans un plan formant un angle avec l'axe longitudinal du rail.

8. Procédé selon l'une des revendications 1 à 6, caractérisé par le fait qu'on projette la trace dans deux demi-plans formant un angle entre eux et avec l'axe longitudinal du rail.

9. Procédé selon la revendication 1, caractérisé par le fait que la source de rayonnement est une source de rayonnement lumineux.

10. Dispositif de mesure pour la mise en œuvre du procédé selon la revendication 1 comprenant, monté sur un chariot (7) tracté le long de la voie, une source de rayonnement (10) projetant une trace (14, 18) sur toute la surface du champignon du rail (2) et des moyens d'observation (20, 21) de cette trace (14, 18) à partir de plusieurs points situés en dehors de ce plan de projection, caractérisé par le fait qu'il comporte des moyens formant un point singulier (19) sur la trace projetée constituant une origine flottante ; par le fait que les moyens d'observation (20, 21) de la trace permettent l'observation de celle-ci sous au moins deux directions formant un angle entre elles et avec le plan de projection de la trace, moyens d'observation (21) situés de part et d'autre d'un plan vertical contenant l'axe longitudinal du rail, et créant deux reproductions partielles de la trace contenant chacune l'image de l'origine flottante ; par le fait qu'il comporte un appareillage électronique (22-30) comportant des moyens superposant les images de l'origine flottante des reproductions partielles de la trace et des moyens décalant angulairement ces reproductions partielles d'un angle fonction des angles d'observation de cette trace et reconstitue la totalité du profil transversal du champignon du rail.

11. Dispositif selon la revendication 10, caractérisé par le fait que la source de rayonnement projette la trace (14, 18) dans un plan formant un angle avec l'axe longitudinal du rail.

12. Dispositif selon la revendication 11, caractérisé par le fait qu'il comporte deux miroirs inclinés (21) l'un par rapport à l'autre renvoyant chacun une reproduction partielle du rail sur une même caméra (20).

13. Dispositif selon la revendication 11, caractérisé par le fait qu'il comporte deux caméras d'observation du rail formant un angle entre elles.

14. Dispositif selon la revendication 11, caractérisé par le fait qu'il comporte deux fibres optiques captant les représentations partielles du rail et transmettant celles-ci à une ou deux caméras.

15. Dispositif selon l'une des revendications 11 à 14, caractérisé par le fait que la source de rayonnement est constituée par un laser (10) fixé au chariot (7), émettant deux faisceaux (11, 11') opposés contenus dans un même plan, et par le fait qu'il comporte deux miroirs oscillants (12, 16) montés sur ce chariot (7) recevant chacun un des faisceaux du laser (11, 11') et le dirigeant sur une portion de la surface du champignon du rail.

16. Dispositif selon la revendication 15, caractérisé par le fait que l'amplitude d'oscillation des miroirs est telle qu'une partie de la surface du champignon du rail, situé dans le plan de la trace (14, 18), ne reçoit pas de rayons et constitue un point singulier (19) servant d'origine flottante dont l'intensité lumineuse est plus faible que celle du reste de la trace (14, 18).

17. Dispositif selon la revendication 15, caractérisé par le fait que l'amplitude d'oscillation des miroirs est telle qu'une partie de la surface du champignon du rail, située dans le plan de la trace, reçoive les rayons émanant des deux miroirs constituant ainsi un point singulier servant d'origine flottante dont l'intensité lumineuse est plus forte que celle du reste de la trace.

## Claims

1. A method for the measurement of the transverse profile of the head of a rail of a railway track according to which a trace is projected by radiation onto the surface of the head of a railway track, and then said trace is observed from several points located outside the plane of projection of said trace, characterized by the fact that one point of the trace is particularized to create a floating origin, by the fact that said trace is observed from at least two directions forming an angle between them and located on either side of a vertical plane passing through the longitudinal axis of the rail to obtain partial reproductions of said trace containing each the floating origin, and by the fact that the images of the floating origin of the partial reproductions of the trace are superimposed ant that said partial reproductions are angularly displaced the one with respect to the others around the floating origin, by an angle which depends on the angles from which the trace is observed.

2. A method as claimed in claim 1, characterized by the fact that the measured profile is compared to a comparison profile and that the deviations between these two profiles are determinated in graphical or numerical form.

3. A method according to claim 2, characterized by the fact that a base for the measured profile, as well as for the comparison profile is determined, said base passing through the points of these profiles corresponding to the lower points of the said wall of the head of the actual rail, respectively the comparison rail, and that a middle line is determined for each said bases and that its intersection with their respective profile is determined.

4. A method according to claim 3, characterized by the fact that the measured profile is compared to the comparison profile by superimposing the said middle lines of said profile and by superimposing the intersections of these middle lines with the respective profile.

5. A method according to claim 3, characterized by the fact that the measured profile is compared to the comparisons profile by putting in coincidence the ordinates of said intersections of each said middle lines with their corresponding profile and by putting in coincidence the abscissae of the points of the bases of each profile corresponding to the lower point of the inside wall of each profile.

6. A method according to one of claims 1 to 5, characterized by the fact that one measures successively at least two profiles of the rail at different locations of it, then constitutes an average along the measured profiles, and by the fact that this mean value of the measured profiles is compared to a comparison profile to obtain a graphical or numerical representation of the deviations existing between the mean measured profile and the comparison profile.

7. A method according to one of the preceeding claims, characterized by the fact that the trace is projected in one plane forming an angle with the longitudinal axis of the rail.

8. A method according to one of the claims 1 to 6, characterized by the fact that the trace is projected in two half-planes forming an angle between them and with the longitudinal axis of the rail.

9. A method as claimed in claim 1, characterized by the fact that the source of rays is a light source.

10. Device for the execution of the method according to claim 1 comprising, mounted on a carriage (7) pulled along the track, a source of rays (10) projecting a trace (14, 18) on the whole surface of the head of the rail (2) and means to observe (20, 21) said trace (14, 18) from several points located outside said plane of projection, characterized by the fact that it comprises means forming a particular point (19) on the projected trace constituting a floating origin ; by the fact that the means to observe (20, 21) the trace enable its observation from at least two directions forming an angle between them and with the plane of projection of the trace, said means to observe (20, 21) being located on either side of a vertical plane containing the longitudinal axis of the rail, and creating two partial reproductions of the trace each containing the image of the floating origin ; by the fact that it comprises an electronic apparatus (22, 30) comprising means to superimpose the images of said floating origin of the partial reproductions of the trace and means angularly displacing these partial reproductions by angle depending on the angles from which the trace is observed and reconstituting the totality of the transverse profile of the head of the rail.

11. Device according to claim 10, characterized by the fact that the source of rays projects the trace (14, 18) in a plane forming an angle with the longitudinal axis of the rail.

12. Device according to claim 11, characterized by the fact that it comprises two mirrors inclined (21) the one with respect to the other, reflecting each one a partial reproduction of the rail into a same camera (20).

13. Device according to claim 11, characterized by the fact that it comprises two cameras for observing the rail, forming an angle between them.

14. Device according to claim 11, characterized by the fact that it comprises two optical fibers taking the partial representations of the rail and transmitting them to one or two cameras.

15. Device according to one of claims 11 to 14, characterized by the fact that the source of rays is made by a laser (10) fixed to the carriage (7), emitting two opposed rays (11, 11') contained in a single plane, and by the fact that it comprises two oscillating mirrors (12, 16) mounted on said carriage (7) and each receiving one of the laser rays (11, 11') and directing it onto a portion of the surface of the head of the rail.

16. Device according to claim 15, characterized by the fact that the amplitude of oscillation of the mirrors is such that a portion of the surface of the head of the rail, located in the plane of the trace (14, 18), does not receive any rays and constitutes a particular point (19) forming a floating origin the luminous intensity of which is less than that of the rest of the trace (14, 18).

17. Device according to claim 15, characterized by the fact that the amplitude of oscillation of the mirrors is such that a portion of the surface of the head of the rail, located in the plane of the trace, receives rays coming from both mirrors constituting a particular point forming a floating origin the luminous intensity of which is greater than that of the rest of the trace.

## Patentansprüche

1. Verfahren zum Vermessen des Querprofils des Kopfs einer Eisenbahnschiene, wobei durch Strahlung eine Spur auf die Oberfläche des Kopfs der Eisenbahnschiene projeziert wird und wobei diese Spur ausgehend von mehreren Punkten beobachtet wird, die sich außerhalb der Projektionsebene dieser Spur befinden, gekennzeichnet durch Auszeichnen eines Punkts der Spur, um daraus einen schwimmenden Ursprung zu machen, durch Beobachten der Spur aus wenigstens zwei Richtungen, die untereinander und mit der Projektionsebene der Spur einen Winkel einschliessen und sich beiderseits einer durch die Längsachse der Schiene gehenden senkrechten Ebene befinden, zum Bilden von teilweisen Wiedergaben der Schiene, die jeweils den schwimmenden Ursprung enthalten, durch Überlagern der Bilder des schwimmenden Ursprungs der teilweisen Wiedergaben der Spur und durch um den schwimmenden Ursprung erfolgendes Versetzen der teilweisen Wiedergaben der Spur um einen Winkel in Abhängigkeit von den Winkeln, unter denen die Spur beobachtet wird.

2. Verfahren nach Anspruch 1, gekennzeichnet durch Vergleichen des gemessenen Profils mit einem Vergleichsprofil und durch Bestimmen der Unterschiede zwischen diesen beiden Profilen in graphischer oder numerischer Form.

3. Verfahren nach Anspruch 2, gekennzeichnet durch Bestimmen einer Basis für das gemessene Profil und das Vergleichsprofil, die durch die Punkte dieser Profile hindurchgeht, die den unteren Punkten der Flanken des tatsächlichen Schienenkopfs bzw. des Vergleichsschienenkopfs entsprechen, und durch Bestimmen der Mittelsenkrechten dieser Basen und ihres Schnitts mit dem zugehörigen Profil.

4. Verfahren nach Anspruch 3, gekennzeichnet durch Vergleichen des gemessenen Profils mit dem Vergleichsprofil durch Überlagern der Mittelsenkrechten dieser Profile und durch Indeckungbringen der Schnitte dieser Mittelsenkrechten mit dem zugehörigen Profil.

5. Verfahren nach Anspruch 3, gekennzeichnet durch Vergleichen des gemessenen Profils mit dem Vergleichsprofil durch Indeckungbringen der Ordinaten der Schnittpunkte jeder Mittelsenkrechten mit dem entsprechenden Profil und durch Indeckungbringen der Abszissen der Punkte der Basis jedes dieser Profile, welche Punkte dem unteren Punkt der inneren Flanke jedes Profils entsprechen.

6. Verfahren nach einem der Ansprüche 1 bis 5, gekennzeichnet durch aufeinanderfolgendes Messen von zwei oder mehreren Profilen der Schiene an verschiedenen Stellen hiervon, durch anschließendes Bilden des Mittelwerts der gemessenen Profile und durch Vergleichen dieses Mittelwerts der gemessenen Profile mit dem Vergleichsprofil zum Erzielen einer graphischen und numerischen Darstellung der Unterschiede zwischen dem gemessenen mittleren Profil und dem Eichprofil.

7. Verfahren nach einem der vorhergehenden Ansprüche, gekennzeichnet durch Projizieren der Spur in einer Ebene, die mit der Längsachse der Schiene einen Winkel einschließt.

8. Verfahren nach einem der Ansprüche 1 bis 6, gekennzeichnet durch Projizieren der Spur in zwei Halbebenen, die einen Winkel miteinander und mit der Längsachse der Schiene einschließen.

9. Verfahren nach Anspruch 1, dadurch gekennzeichnet, daß die Strahlungsquelle eine Lichtquelle ist.

10. Meßvorrichtung zur Durchführung des Verfahrens nach Anspruch 1, mit einer Strahlungsquelle (10), die auf einem längs des Schienenweges gezogenen Wagen (7) befestigt ist und eine Spur (14, 18) auf die gesamte Oberfläche des Schienenkopfes (2) projiziert, und mit einer Einrichtung (20, 21) zur Beobachtung dieser Spur (14, 18) ausgehend von mehreren Punkten, die sich außerhalb dieser Projektionsebene befinden, gekennzeichnet durch eine Einrichtung, die auf der projizierten Spur einen singulären Punkt (19) bildet, der einen schwimmenden Ursprung darstellt, wobei die Einrichtung (20, 21) zur Beobachtung der Spur die Beobachtung der Spur aus wenigstens zwei Richtungen ermöglicht, die einen Winkel miteinander und mit der Projektionsebene der Spur einschließen, wobei sich die Beobachtungseinrichtung (21) beiderseits einer die Längsachse der Schiene enthaltenden senkrechten Ebene befindet und zwei teilweise Wiedergaben der Spur erzeugt, die jeweils das Bild des schwimmenden Ursprungs enthalten, durch ein elektronisches Gerät (22-30) mit einer Einrichtung, die die Bilder des schwimmenden Usprungs der teilweisen Wiedergaben der Spur überlagert und durch eine Einrichtung, die diese teilweisen Wiedergaben um einen Winkel versetzt, der von den Beobachtungswinkeln der Spur abhängt und das gesamte Querprofil des Schienenkopfes widerherstellt.

11. Vorrichtung nach Anspruch 10, dadurch gekennzeichnet, daß die Strahlungsquelle die Spur (14, 18) in einer Ebene projiziert, die mit der Längsachse der Schiene einen Winkel einschließt.

12. Vorrichtung nach Anspruch 11, gekennzeichnet durch zwei zueinander geneigte Spiegel (21), die jeweils eine Teilwiedergabe der Schiene auf ein und dieselbe Kamera (20) werfen.

13. Vorrichtung nach Anspruch 11, gekennzeichnet durch zwei einen Winkel miteinander einschließende Kameras zur Beobachtung der Schiene.

14. Vorrichtung nach Anspruch 11, gekennzeichnet durch zwei Faseroptiken, die die teilweisen Wiedergaben der Schiene aufnehmen und diese auf eine oder zwei Kameras übertragen.

15. Vorrichtung nach einem der Ansprüche 11 bis 14, dadurch gekennzeichnet, daß die Strahlungsquelle aus einem am Wagen (7) befestigten Laser (10) besteht, der zwei entgegengesetzte in ein und derselben Ebene enthaltene Strahlen (11, 11') aussendet, und gekennzeichnet durch zwei am Wagen (7) befestigte, schwingende Spiegel (12, 16), von denen jeder einen der Laserstrahlen (11, 11') aufnimmt und ihn auf einen Teil der Oberfläche des Schienenkopfes richtet.

16. Vorrichtung nach Anspruch 15, dadurch gekennzeichnet, daß die Schwingungsamplitude der Spiegel so beschaffen ist, daß ein Teil der Oberfläche des Schienenkopfes, der sich in der Ebene der Spur (14, 18) befindet, keine Strahlen empfängt und einen als schwimmenden Ursprung dienenden singulären Punkt (19) bildet, dessen Leuchtintensität geringer als die der übrigen Spur (14, 18) ist.

17. Vorrichtung nach Anspruch 15, dadurch gekennzeichnet, daß die Schwingungsamplitude der Spiegel so beschaffen ist, daß ein Teil der Oberfläche des Schienenkopfes, der sich in der Ebene der Spur befindet, die von den beiden Spiegeln ausgehenden Strahlen empfängt und auf diese Weise einen singulären Punkt bildet, der als schwimmender Ursprung dient, dessen Leuchtintenstität größer als jene der übrigen Spur ist.

# FIG.1

# FIG. 2

# FIG 3

FIG. 4

FIG. 5

FIG. 6

FIG. 7

2

FIG. 8

EP 0 087 592 B1

FIG. 9

4